**Europäisches Patentamt**

(19) **European Patent Office**

**Office européen des brevets**

(11) Veröffentlichungsnummer: **0 011 881**
**B1**

(12) # EUROPÄISCHE PATENTSCHRIFT

(45) Veröffentlichungstag der Patentschrift:
**07.07.82**

(21) Anmeldenummer: **79200084.6**

(22) Anmeldetag: **19.02.79**

(51) Int. Cl.³: **B 62 D 13/04,** B 60 D 5/00,
B 62 D 47/02, B 62 D 53/00

(54) Gliederautobus.

(30) Priorität: **24.11.78 NL 7811557**

(43) Veröffentlichungstag der Anmeldung:
**11.06.80 Patentblatt 80/12**

(45) Bekanntmachung des Hinweises auf die Patenterteilung:
**07.07.82 Patentblatt 82/27**

(84) Benannte Vertragsstaaten:
**BE DE FR GB IT SE**

(56) Entgegenhaltungen:
**DE A 1555432**
**DE A 2456165**
**DE B 1001595**
**DE B 1105445**
**DE B 1136222**
**DE B 1163360**
**DE B 1211075**
**DE C 851601**
**GB A 327750**
**US A 2843417**

(73) Patentinhaber: **Van Hool, naamloze vennootschap,**
**Bernard Van Hoolstraat 58, B-2578 Lier (BE)**

(72) Erfinder: **Boucquey, Alain Marie Victor Henri, Prins**
**Boudewijnlaan 48, B-1180 Brussel (BE)**
Erfinder: **Van Hool, Leon Leopold Joanna, Misstraat 72,**
**B-2578 Lier (BE)**

(74) Vertreter: **Bockstael, Marius Florimond Jean et al,**
**Arenbergstraat 13, B-2000 Anvers (BE)**

## Gliederautobus

Die vorliegende Erfindung bezieht sich auf einen Gliederautobus mit einem Vor- (1) und einem Nachläufer (2) und einem diese verbindenden Drehkranz (3) umfassend einen auf dem Bodenrahmen (62) des Vorläufers (1) befestigten Unterteil (14) und einen um eine senkrechte Drehachse drehbar mit diesem verbundenen Oberteil (15, 16), der auf beiden Fahrzeugseiten je ein Lager (19 bis 26) aufweist, in denen der Rahmen (27) des Nachläufers (2) um eine horizontale Achse (B-B) schwenkbar gelagert ist, wobei ein Querbalken (32) eines Portals (4) gelenkig (35) mit dem Oberteil (15, 16) und das Portal (4) über je einen Balg (5, 6) mit dem Vor- (1) und Nachläufer (2) verbunden sind, und Mittel (53 bis 61) vorgesehen sind, die den Querbalken (32) in der Winkelhalbierenden des horizontalen Knickwinkels zwischen Vor- (1) und Nachläufer (2) halten.

Ein derartiger Gliederautobus ist aus der deutschen Patentanmeldung DE-B Nr. 1211075 bekannt, worin aber nichts über die Lage des Antriebmotors und des Steuermechanismus de Nachläuferräder gesagt wird.

Aufgabe der Erfindung ist die Schaffung eines Gliederautobusses der eingangs umschriebenen Art, dessen Bodenhöhe sich auf ein Mindestmass beschränkt und wobei die Steuerung der Räder des gezogenen Fahrzeuges derart stattfindet, dass die Schwingungen desselben in bezug auf das ziehende Fahrzeug das Verhalten dieser Räder keineswegs beeinflussen.

Erfindungsgemäss wird diese Aufgabe dadurch erfüllt, dass der Motor (63) im Vorläufer (1) angeordnet ist, dessen Hinterräder (8) angetrieben werden, und dass die Räder (9) des Nachläufers (2) über einen Hebelmechanismus (41 bis 52) von einer Lenkstange (40) gesteuert werden, die über ein Kugelgelenk (38, 39) mit dem Querbalken (32) verbunden ist, wobei der Mittelpunkt des Kugelgelenks (38, 39) unter dem Querbalken (32) auf der erwähnten horizontalen Achse (B-B) liegt.

Es ist zu bemerken, dass aus dem US-Patent Nr.2843417 ein Gliederautobus bekannt ist, wobei die Räder des Nachläufers mittels einer Lenkstange über einen Hebelmechanismus gesteuert werden. Diese Lenkstange ist aber nicht auf diesebe Weise wie die des erfindungsgemässen Glieder autobusses gekuppelt. Ein weiteres Kennzeichen des erfindungsgemässen Gliederautobusses bildet die Tatsache, dass der Angriffspunkt des Steuermechanismus am vorgenannten Portal (4) sich neben dem Drehkranz (3) befindet. Diese Massnahme trägt ebenfalls dazu bei um eine Mindestbodenhöhe zu erhalten.

Die Kennzeichen und Vorteile des erfindungsgemässen Systems treten deutlicher aus der nachfolgenden eingehenden Beschreibung einer Vorzugsausführungsweise des erfindungsgemässen Gliederautobusses zutage. Diese ohne irgendeine einschränkende Absicht gegebene Beschreibung findet an Hand der beiliegenden Zeichnungen statt, wo

die Abbildung 1 eine Seitenansicht eines erfindungsgemässen Gliederautobusses schematischerweise wiedergibt;

die Abbildung 2 eine Draufsicht des Rahmens des Gliederautobusses gemäss der Abbildung 1 mit den Hauptantriebsmitteln und Hauptverbindungselementen wiedergibt;

die Abbildung 3 den Teil F3 der Abbildung 1 nach Entfernung der Karrosserie in vergrössertem Masstab wiedergibt;

die Abbildung 4 eine Ansicht gemäss der Linie IV-IV der Abbildung 3 wiedergibt;

die Abbildung 5 einen gemäss der Linie V-V der Abbildung 3 gemachten Schnitt wiedergibt;

die Abbildung 6 eine Teilansicht gemäss des Pfeiles F6 der Abbildung 3 wiedergibt; und die Abbildung 7 den Teil F7 der Abbildung 2 in vergrössertem Massstab wiedergibt.

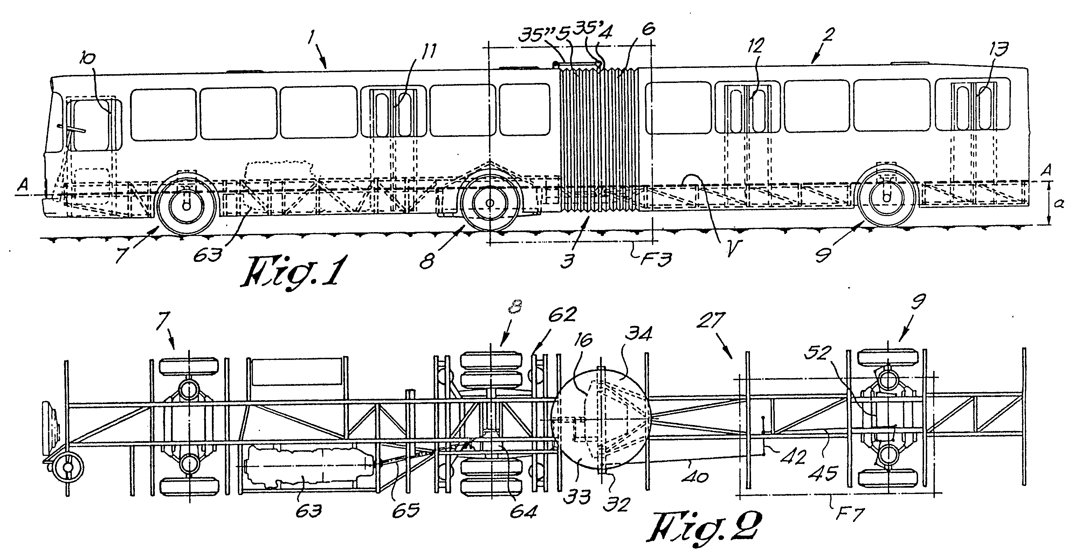

Wie aus der Abbildung 1 ersichtlich ist, besteht der Gliederautobus gemäss der vorliegenden Ausführungsweise der Erfindung im wesentlichen aus einem Vorläufer 1 und einem Nachläufer 2, welche geeigneterweise mittels eines Drehkranzes 3 gelenkig aneinander gekuppelt sind, wobei bekanntlich zwischen diesen beiden Fahrzeugen ein Portal 4 mit den beiden Faltebälgen 5 und 6 vorgesehen ist.

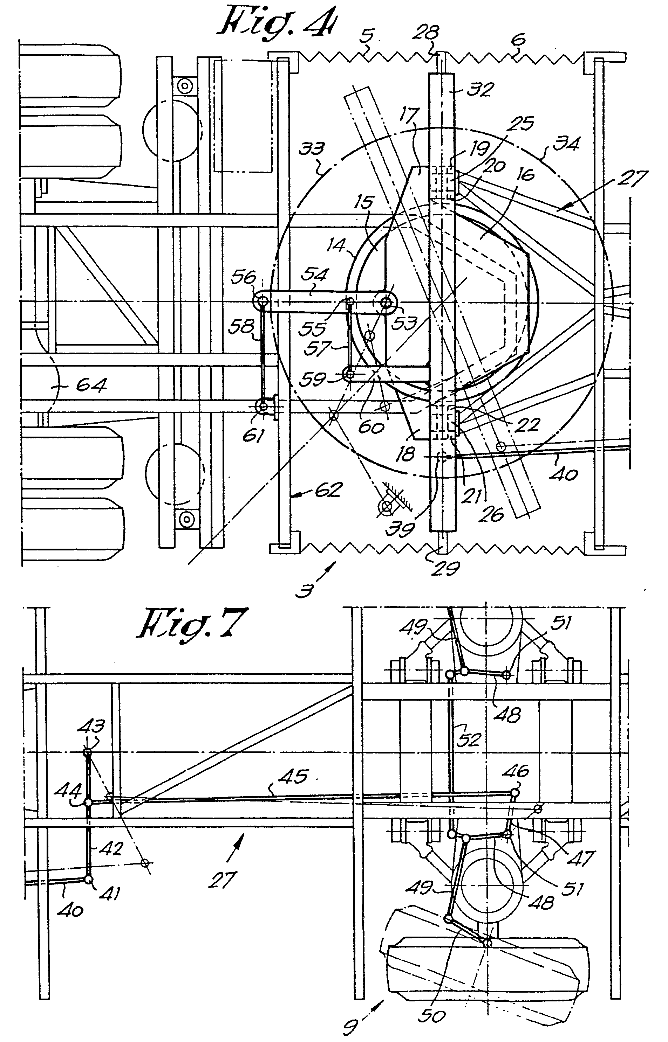

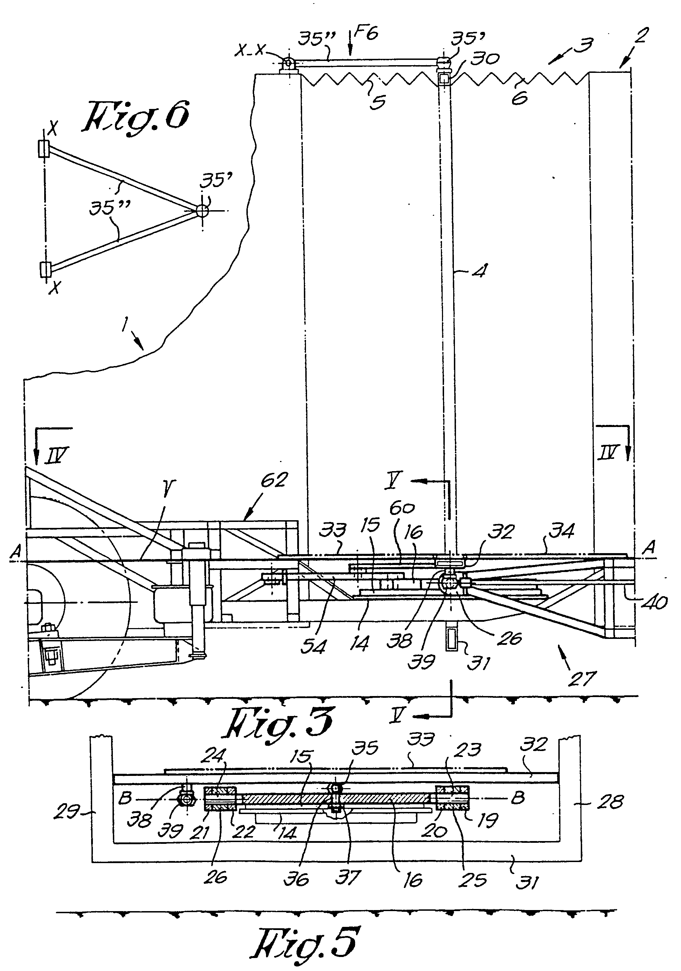

Wie aus den Abbildungen 1 und 2 ersichtlich ist, wird das Fahrzeug 1 durch zwei Achsen 7 und 8 und das Fahrzeug 2 durch eine Achse 9 getragen, wobei die Achse 7 die eigentlichen Steuerräder und die Achse 8 die Antriebsräder des Fahrzeuges und anderseits die Achse 9 Hilfssteuerräder für das automatische Nachsteuern des Nachläufers 2 in den Kurven trägt, derart dass die durch die Räder der Achsen 7, 8 und 9 gezogenen Achsenlinien sich in den Kurven in einem und demselben Punkt schneiden.

Zweck der vorliegenden Erfindung ist das Schaffen eines auf geringer Höhe A-A oberhalb des Erdbodens liegenden und sich über die Gesamtlänge der beiden Fahrzeuge 1 und 2 erstreckenden Bodens V, wobei der Abstand zwischen demselben und dem Erdboden höchstens 680 mm beträgt, dies alles derart, dass ausser den bekannten Vorteilen eines niedrigen, sich über die gesamte Autobuslänge waagerecht erstreckenden Bodens, vier enge bzw. breite Türen 10 bis 14 vorgesehen werden können, deren Schwellenhöhe klein genug ist um das Ein- und Aussteigen zu erleichtern.

Einen weiteren grossen Vorteil eines waagerechten Bodens, zusammen mit der einseitigen Lage des Motors, bildet die Tatsache, dass dies die Anordnung von vier gleichmässig über die Autobuslänge verteilten Türen an der anderen Seite ermöglicht.

Um den waagerechten Boden erfindungsgemäss auf geringer Höhe über die Gesamtlänge des Gliederautobusses anordnen zu können, erwies es sich als notwendig den Drehkranz 3 auf möglichst niedriger Höhe zu montieren und den mit dem Portal 4 zusammenwirkenden Übertragungsmechanismus für die Hinterräder des Nachläufers 2 ebenfalls zu ändern.

Der sehr einfach gebaute Drehkranz des erfindungsgemässen Gliederautobusses besteht im wesentlichen aus einem am Schlepper 1 befestigten Unterteil 14 und einem freidrehend mit diesem Unterteil verbundenen Oberteil 15.

Erfindungsgemäss ist am vorgenannten Oberteil 15 des Drehkranzes eine Stütze 16 befestigt, die beiderseits des Autobusses einen Vorsprung 17, 18 aufweist, woran Ohren 19 bis 20 und 21 bis 22 befestigt sind, wobei zwischen beiden Ohren eines jeden Paares mittels einer Achse 23, 24 ein Ohr 25, 26 befestigt ist, das zum Rahmen 27 des Nachläufers 2 gehört.

Das vorgenannte Portal 4 besteht im wesentlichen aus zwei Pfosten 28 und 29 welche an drei Stellen mittels Querbalken miteinander verbunden sind und zwar mittels eines Oberquerbalkens 30, eines Unterquerbalkens 31 und eines Zwischenquerbalkens 32, woran die nahezu halbkreisförmigen Platten 33 und 34 gelenkig befestigt sind. Letztgenannter Querbalken 32 ist in seiner Mitte mit dem Gehäuse 35 eines Kugelgelenkes verbunden, deren kugelförmiger Teil mittels einer vorzugsweise konischen Spindel in einer entsprechend konischen Bohrung der Platte 16 ruht, wobei das Gelenk gegen die Unterseite dieser Platte 16 angezogen ist.

Das vorgenannte aus den zwei Pfosten 28 und 29 und den drei Querbalken 30, 31 und 32 bestehende Portal schwenkt um eine durch das untere Kugelgelenk 35 und ein oberes, an um die Horizontalachse X-X schwenkenden Stangen 34″ befestigtes Kugelgelenk 35′ gebildete Vertikalachse. Das Portal ist auf diese Weise aufgehängt.

Die Originalität der Portalkonstruktion liegt in der zweifachen Aufgabe derselben, nämlich einerseits im Tragen des Faltebalges und anderseits im Antrieb der Steuervorrichtung der dritten Achse.

Das Antriebsmittel für die Steuerung der Räder des Nachläufers 2 ist derart in der Nähe des erfindungsgemässen Drehkranzes angeordnet, dass der Boden V noch weiter nach unten verschoben werden kann. Zu diesem Zweck ist neben der vorgenannten Platte 16 unter dem Querbalken 32 beispielsweise eine Achse 38 befestigt, welche ihrerseits mit der Kugel eines Kugelgelenkes verbunden ist, dessen Gehäuse 39 an einer Lenkstange 40 gekuppelt ist, welche ihrerseits mittels einer Spindel 41 gelenkig verbunden ist mit dem einen Ende eines Hebels 42, dessen anderes Ende um eine im bezug auf den Rahmen 27 befestigte Achse 43 zu schwenken vermag, wobei dieser Hebel 42 in einem Zwischenpunkt mittels einer Spindel 44 gelenkig befestigt ist am einen Arm 47 eines zweiarmigen Hebels 47, 48 der um eine rahmenfeste Achse 51 schwenkbar ist, und dessen anderer Arm 48 über je eine Steuerstange 49 mit den beiden Rädern 9 des Nachläufers verbunden ist. Die Hebel 48 sind mittels einer Querstange 52 gelenkig miteinander verbunden.

Das vorgenannte Kugelgelenk 38, 39 ist derart angeordnet, dass seine Drehachse auf der Höhe B-B liegt, wo ebenfalls die durch die Drehpunkte 23 und 24 gehende Achsenlinie liegt, wobei der Drehpunkt dieses Kugelgelenkes 39 zugleich auf dem verlängerten Teil dieser Achsenlinie liegt, derart dass die in bezug auf den Vorläufer 1 stattfindenden Schwankungen des Nachläufers 2 das Verhalten der Räder der Achse 9 nicht beeinflussen können.

Es ist ohne weiteres ersichtlich, dass es sich auf diese Weise eine derartige Drehkranzkonstruktion für einen Gliederautobus und eine derartige Steuerung der Nachläuferräder desselben ergeben, dass der Boden V sich auf sehr niedriger Höhe anordnen lässt.

Ausserdem ist die vorgenannte Platte 16 mittels einer Spindel 53 gelenkig mit einem Hebel 54 verbunden, der seinerseits mittels Spindeln 55 und 56 gelenkig an den Stangen 57 und 58 gekuppelt ist, wobei die erste Stange 57 mittels einer Spindel 59 mit einer Stütze 60 des vorgenannten Querbalkens 32 des Portals 4 und die zweite Stange 58 mittels einer Spindel 61 mit dem Rahmen 62 des Vorläufers 1 verbunden ist.

Aufgabe des Antriebsmechanismus 53 bis 61 ist bekannterweise das Portal fortwährend in der Mitte des Winkels zwischen den beiden Fahrzeugen zu halten.

Um den Boden A-A des Fahrzeuges auch vorne auf derselben Höhe anordnen zu können, wird der Motor 63 erfindungsgemäss an der einen Seite zwischen der Vorderachse 7 und der Hinterachse 8 des Vorläufers montiert, wobei, um den Übertragungswinkel möglichst klein zu halten, ein exzentrisch montiertes, mittels einer geeigneten Kardanwelle am Motor 63 gekuppeltes Differentialgetriebe vorgesehen ist. Der Motor befindet sich vorzugsweise an der anderen Seite in bezug auf die Einsteigtüren.

## Patentansprüche

1. Gliederautobus mit einem Vor- (1) und einem Nachläufer (2) und einem diese verbindenden Drehkranz (3) umfassend einen auf dem Bodenrahmen (62) des Vorläufers (1) befestigten Unterteil (14) und einen um einer senkrechte Drehachse drehbar mit diesem verbundenen Oberteil (15, 16), der auf beiden Fahrzeugseiten je ein Lager (19 bis 26) aufweist, in denen der Rahmen (27) des Nachläufers (2) um eine horizontale Achse (B-B) schwenkbar gelagert ist, wobei ein Querbalken (32) eines Portals (4) gelenkig (35) mit den Oberteil (15, 16) und das Portal (4) über je einen Balg (5, 6) mit dem Vor- (1) und Nachläufer (2) verbunden sind, und Mittel (53 bis 61) vorgesehen sind, die den Querbalken (32) in der Winkelhalbierenden des horizontalen Knickwinkels zwischen Vor- (1) und Nachläufer (2) halten, dadurch gekennzeichnet, dass der Motor (63) im Vorläufer (1) angeordnet ist, dessen Hinterräder (8) angetrieben werden, und dass die Räder (9) des Nachläufers (2) über einen Hebelmechanismus (41 bis 52) von einer Lenkstange (40) gesteuert werden, die über ein Kugelgelenk (38, 39) mit dem Querbalken (32) verbunden ist, wobei der Mittelpunkt des Kugelgelenks (38, 39) unter dem Querbalken (32) auf der erwähnten horizontalen Achse (B-B) liegt.

2. Gliederautobus gemäss dem Anspruch 1, dadurch gekennzeichnet, dass der Oberteil (15, 16) des Drehkranzes (3) eine Stütze (16) umfasst mit je zwei Ohren (19, 20-21, 22) auf beiden Fahrzeugseiten, zwischen denen mittels einer Drehspindel (23, 24) ein Ohr (25, 26) des Nachläufers (27) angeordnet ist.

3. Gliederautobus gemäss dem Anspruch 1 oder 2, dadurch gekennzeichnet, dass der Querbalken (32) mit dem Gehäuse (35) eines zweiten Kugelgelenks verbunden ist, dessen Kugel mit einer Achse (36) verbunden ist, die unverschiebbar an der Stütze (16) befestigt ist.

4. Gliederautobus gemäss einem der vorhergehenden Ansprüche, dadurch gekennzeichnet, dass die Lenkstange (40) gelenkig verbunden ist mit dem einen Ende eines Hebels (42), dessen anderes Ende um eine in bezug auf den Rahmen (27) befestigte Achse (43) zu schwenken vermag, wobei dieser Hebel (42) in einem Zwischenpunkt mittels einer Spindel (44) gelenkig befestigt ist an einer zweiten Stange (45), welche anderseits gelenkig befestigt ist am einen Arm (47) eines zweiarmigen Hebels (47, 48) der um eine rahmenfeste Achse (51) schwenkbar ist, und dessen anderer Arm (48) über je eine Steuerstange (49) mit den beiden Rädern (9) des Nachläufers (2) verbunden ist.

5. Gliederautobus gemäss einem der vorhergehenden Ansprüche, dadurch gekennzeichnet, dass sich das erste Kugelgelenk (38, 39) neben dem Drehkranz (3) befindet.

6. Gliederautobus gemäss einem der vorhergehenden Ansprüche, dadurch gekennzeichnet, dass am Oberteil (15, 16) bzw. an der Stütze (16) ein Hebel (54) gelenkig befestigt ist, der in zwei Punkten gelenkig an Stangen (57 bis 58) gekuppelt ist, deren zweites Ende gelenkig verbunden ist respektive mit einem am Querbalken (32) befestigten Arm (60) und mit dem Bodenrahmen (62).

7. Gliederautobus gemäss dem Anspruch 1, dadurch gekennzeichnet, dass der Motor (63) an der einen Seite zwischen den Achsen des Vorläufers (1) angeordnet ist und mittels einer Kardanwelle (65) mit einem asymmetrisch montierten, die Hinterräder (8) des Vorläufers (1) antreibenden Differentialgetriebe (64) verbunden ist.

**Revendications**

1. Autobus articulé comportant une partie avant ou partie motrice (1) et une partie arrière ou remorque (2), mutuellement accouplées par une couronne de giration (3), composée d'une partie inférieure (14) fixée au châssis (62) de la partie motrice (1) du véhicule et d'une partie supérieure (15, 16) réunie de manière rotative à cette partie supérieure au moyen d'un axe de rotation vertical et munie d'un palier (19-26) au niveau de chacune des deux parties du véhicule, servant à porter le châssis (27) de la remorque (2) capable de pivoter autour d'un axe horizontal (B-B), une traverse (32) d'un portique (4) étant articulée au moyen d'une articulation (35) à ladite partie supérieure (15, 16) et le portique (4) étant réuni de part et d'autre avec un accordéon (5, 6) à la partie motrice (1) et la remorque (2) du véhicule, et des moyens (53-61) étant prévus pour maintenir ladite traverse (32) sur la bissectrice de l'angle horizontal entre la partie avant ou partie motrice (1) et la partie arrière ou remorque de l'autobus articulé, caractérisé en ce que le moteur (63) est monté dans la partie motrice (1), dont le train de roues arrière (8) est attaqué, et en ce que les roues (9) de la remorque (2) sont commandées, par l'entremise d'un mécanisme de transmission à leviers (41-52), au moyen d'une tige de commande (40), articulée à ladite traverse (32) au moyen d'une articulation à rotule (38, 39), dont le centre se trouve sous la traverse (32) sur ledit axe horizontal (B-B).

2. Autobus articulé selon la revendication 1, caractérisé en ce que la partie supérieure (15, 16) de la couronne de giration (3) présente un support (16), muni de deux oreilles (19, 20-21, 22) de part et d'autre du véhicule, entre lesquelles est montée une oreille (25, 26) de la remorque (2) au moyen d'un pivot de rotation (23, 24).

3. Autobus articulé selon la revendication 1 ou 2, caractérisé en ce que ladite traverse (32) est fixée au corps (35) d'une deuxième articulation à rotule, dont la bille porte un axe solidaire dudit support (16).

4. Autobus articulé selon l'une ou l'autre des revendications précédentes, caractérisé en ce que ladite tige de commande (40) est articulée à l'une des extrémités d'un levier (42), dont l'autre extrémité est capable de pivoter autour d'un axe (43) fixe par rapport au châssis (27), ce levier (42) étant articulé en un point intermédiaire au moyen d'un pivot (44) à une deuxième tige (45), qui est, d'autre part, articulée à l'un des bras (47) d'un levier à deux bras (47, 48) qui est capable de pivoter autour d'un axe (51) solidaire du châssis et dont le deuxième bras (48) est fixé aux deux roues (9) de la remorque (2) au moyen d'une tige de commande.

5. Autobus articulé selon l'une ou l'autre des revendications précédentes, caractérisé en ce que la première articulation à rotule (38, 39) est montée à côté de ladite couronne de giration (3).

6. Autobus articulé selon l'une ou l'autre des revendications précédentes, caractérisé en ce que ladite partie supérieure (15, 16) ou audit support (16) est articulé un levier (54), qui est articulé en deux points à des tiges (57-58), dont l'autre extrémité est articulée respectivement à un bras (60) fixé à ladite traverse (32) et au châssis (62).

7. Autobus articulé selon la revendication 1, caractérisé en ce que le moteur (63) est monté latéralement entre les essieux de la partie motrice (1) du véhicule et est accouplé au moyen d'un arbre de Cardan (65) à un différentiel excentrique, qui commande les roues arrière (8) de la partie motrice (1) de l'autobus.

## Claims

1. Articulated motor bus comprising a tracting vehicle (1) and a tracted vehicle (2) and a slewing platform (3), which comprises a lower part (14) fixed on the floor frame (62) of the tracting vehicle(1) and an upper part (15, 16) which is assembled with this lower part so as to be free to rotate around a vertical axis, which shows on each side of the vehicle a bearing (19-26), in which the frame (27) of the tracted vehicle (2) is mounted so as to be free to rotate around a horizontal axis(B-B), one transverse beam (32) of a portal(4) being assembled by means of an articulated joint with the upper part (15, 16) and the portal (4) being assembled through a vestibule (5, 6) with the tracting vehicle (1) and tracted vehicle (2), and means (53-61) being provided, which keep the transverse beam (32) in the median line of the horizontal angle between the tracting vehicle and tracted vehicle, characterized in that the engine (63) is mounted in the tracting vehicle (1), the rear wheels (8) of which are driven, and that the wheels (9) of the tracted vehicle (2) are steered, through a lever mechanism (41-52), by means of a steering rod (40), which is assembled with the transverse beam (32) by means of a ball joint (38, 39), the center of the ball joint (38, 39) under the tranverse beam (32) being located on the aforesaid horizontal axis (B-B).

2. Articulated motor bus according to claim 1, characterized in that the upper part (15, 16) of the upper platform (3) comprises a support (16) with two pairs of lugs (19, 20-21, 22) on each vehicle side, between which, by means of a rotation spindle (23, 24), one lug (25, 26) of the tracted vehicle (2) is located.

3. Articulated motor bus according to claim 1 or 2, characterized in that the transverse beam (32)is assembled with the housing (35) of a second ball joint, the ball of which is assembled with a pin (36), which is immovably assembled with the support (16).

4. Articulated motor bus according to one of the preceding claims, characterized in that the steering rod (40) is assembled by means of an articulation with one end of a lever (42), the other end of which can pivot around a pin (43) which is fixed on the frame (27), this lever (42) being assembled by means of an articulated joint in an intermediate point by means of a spindle (44) with a second rod (45), which at its other end is assembled by means of an articulated joint with an arm (47) of a lever having two arms (47, 48), which can pivot around a pin (51), which is fixed to the frame, and the other arm (48) of which is assembled by means of a steering rod (49) with each of the wheels (9) of the tracted vehicle (2).

5. Articulated motor bus according to one of the preceding claim, characterized in that the first ball joint (38, 39) is located by the side of the slewing platform (3).

6. Articulated motor bus according to one of the preceding claims, characterized in that with the upper part (15, 16), or with the support (16), a lever (54) is assembled by means of an articulated joint, which in two points is coupled by means of articulated joints with bars (57, 58), the second ends of which are assembled by means of articulated joints respectively with an arm (60) fixed to the transverse beam (32) and to the frame of the floor (62).

7. Articulated motor bus according to claim 1, characterized in that the engine (63) is mounted on one side between the axles of the tracting vehicle (1) and is assembled by means of a Cardan shaft (65) with an asymetrically mounted differential (64) driving the rear wheels (8) of the tracting vehicle (1).

**Fig.1**

**Fig.2**

0 011 881

# *Fig. 4*

# *Fig. 7*

**Fig.6**

**Fig.3**

**Fig.5**